## Europäisches Patentamt
## European Patent Office
## Office européen des brevets

(19)

(11) Numéro de publication: **0 043 332 B1**

(12) **FASCICULE DE BREVET EUROPEEN**

(45) Date de publication du fascicule du brevet:
**06.02.85**

(51) Int. Cl.⁴: **E 02 D 5/18, C 09 K 17/00**

(21) Numéro de dépôt: **81401058.3**

(22) Date de dépôt: **01.07.81**

(54) Procédé pour substituer un coulis de ciment, un mortier ou un béton à de la boue de bentonite contenue dans une cavité.

(30) Priorité: **01.07.80 FR 8014702**
**11.07.80 FR 8015510**

(43) Date de publication de la demande:
**06.01.82 Bulletin 82/1**

(45) Mention de la délivrance du brevet:
**06.02.85 Bulletin 85/6**

(84) Etats contractants désignés:
**AT BE DE GB NL**

(56) Documents cités:
**US - A - 4 095 988**
**US - A - 4 193 716**

(73) Titulaire: **SOLETANCHE Société Anonyme dite:, 6 rue de Watford, F-92005 Nanterre (FR)**

(72) Inventeur: **Portier, Jean-Louis, 66, boulevard Soult, F-75012 Paris (FR)**

(74) Mandataire: **Nony, Michel, 29, rue Cambacérès, F-75008 Paris (FR)**

ACTORUM AG

## Description

On sait que l'on utilise des boues bentonitiques constituées par une dispersion colloïdale de bentonite dans l'eau pour remplir les cavités que l'on creuse dans le sol de manière à maintenir leurs parois et éviter aussi les éboulements pendant la durée des travaux.

On sait également que dans un certain nombre de cas l'on est amené à substituer à cette boue bentonitique un produit durcissant tel qu'un coulis constitué par une boue enrichie en ciment, un coulis de ciment, un mortier ou un béton. Cette substitution s'opère en introduisant le coulis, bentonite ciment, le coulis de ciment, le mortier ou le béton en divers endroits de la cavité contenant la boue bentonitique par exemple au fond de la cavité, de manière à ce que le volume du coulis, bentonite-ciment, du coulis de ciment, du mortier ou du béton à l'intérieur de la cavité augmente progressivement tandis que diminue le volume de la boue.

On connaît en particulier d'après le document US-A-4 193 716 un procédé pour construire une paroi imperméable dans le sol, qui consiste à creuser au moins une portion de tranchée dans le sol ayant la largeur et l'épaisseur désirées pour la paroi, à remplacer le matériau extrait de la tranchée par une boue de bentonite et d'eau et après avoir terminé l'excavation de la portion de tranchée à remplacer une quantité prédéterminée de boue bentonite/eau par du ciment, à mélanger le ciment avec le reste de la boue bentonite/eau de manière à produire une boue mélangée de manière homogène constituée d'eau, de bentonite et de ciment et après que la boue de bentonite d'eau et de ciment ait fait sa gélification mais ne soit pas durcie, à répéter les étapes ci-dessus pour d'autres portions adjacentes de la tranchée.

Il est par ailleurs connu d'après le document US-A-4 095 998 de réaliser des compositions auto-durcissantes pour réaliser des fondations dans le sol, ces compositions contenant dans de l'eau un mélange de bentonite de ciment et éventuellement de chaux hydraulique et d'autres adjuvants qui sont mélangés ensemble avant d'être introduits dans la cavité contenue dans le sol.

On peut par exemple de cette manière creuser des tranchées de grande longueur, l'excavation et la mise en place des éléments tels que les armatures, panneaux ou canalisations que doit contenir la tranchée, étant effectuées sous la boue bentonitique tandis que l'on introduit progressivement le coulis, bentonite-ciment, le coulis de ciment, le mortier ou le béton qui se solidifie ultérieurement pour assurer le remblayage total ou partiel de la tranchée et le maintien en place des éléments qu'elle contient.

Les techniques de substitution connues présentent des difficultés importantes de mise en œuvre en raison, notamment du fait qu'après solidification il subsiste à l'intérieur du coulis, bentonite-ciment, du coulis de ciment, du mortier ou du béton des poches plus ou moins importantes de boue bentonitique qui risquent de compromettre la solidité de l'ensemble de l'ouvrage.

C'est d'ailleurs une des raisons pour laquelle une des techniques développées par la Société demanderesse consiste à effectuer l'excavation non point sous boue bentonitique traditionnelle mais sous un coulis constitué par une boue bentonitique contenant un apport de ciment qui permet au coulis de se solidifier après un certain temps. Cette technique évite les difficultés de la substitution du coulis à la boue bentonitique pure mais présente certains inconvénients comme par exemple de ne pas permettre l'utilisation de moyens de forage tels que des fraises qui risqueraient d'être assez rapidement bloqués par le coulis ayant fait sa prise.

L'invention est relative à un nouveau procédé de substitution d'un coulis bentonite-ciment, d'un coulis de ciment, d'un mortier ou d'un béton à une boue bentonitique contenue dans une cavité, ce procédé permettant d'éliminer les inconvénients précités en réduisant dans de très grandes proportions de risque de voir se former des poches de boue bentonitique à l'intérieur du coulis, du mortier ou du béton solidifié.

La présente invention a pour objet un nouveau procédé pour substituer un coulis bentonite-ciment, un coulis de ciment un mortier ou un béton à une boue bentonitique contenue dans une cavité creusée dans le sol, caractérisé par le fait que l'on utilise en vue de sa substitution une boue bentonitique contenant une quantité de chaux correspondant sensiblement à/ou dépassant légèrement la quantité de chaux qui confère à la boue bentonitique son maximum de rigidité.

On constate en effet que lorsque partant d'une boue bentonitique traditionnelle constituée par une dispersion colloïdale de par exemple 20 à 40 kilos de bentonite par $m^3$ d'eau, on ajoute progressivement de faibles quantités de chaux $(CaO)$, il se produit tout d'abord une augmentation nette de la rigidité de la boue qui passe par un maximum pour décroître ensuite.

On sait que l'utilisation du cône dit de MARSH permet de déterminer le temps qu'une quantité donnée d'une substance met pour s'écouler à travers un entonnoir, et de mesurer aussi une valeur de viscosité apparente qui dépend à la fois de la viscosité réelle et de la rigidité de la substance.

Pour déterminer la concentration en chaux qu'il est nécessaire d'ajouter à la boue bentonitique pour qu'elle se situe au maximum de sa rigidité conformément à l'invention il suffit de réaliser une série d'échantillons de boue bentonitique contenant des dosages croissants de chaux et de mesurer dans chaque cas la viscosité apparente au cône de MARSH.

Conformément à l'invention, il convient pour mettre en œuvre le procédé de se situer au voisinage de la proportion de chaux qui donne le temps maximum au cône de MARSH ou à une proportion légèrement supérieure.

Conformément à l'invention, il est possible de se situer au-delà de la quantité de chaux qui confère à la boue son maximum de rigidité à condition qu'une légère adjonction supplémentaire de chaux procure encore une diminution notable du temps d'écoulement mesuré à l'appareil MARSH.

Les essais qui ont été faits par la Société Demanderesse ont montré que ce maximum est généralement atteint lorsque l'on introduit dans la boue bentonitique une quantité de chaux correspondant à un poids de chaux vive (CaO) qui est inférieur à 10% du poids de la bentonite introduite dans la boue. Ce chiffre dépend bien entendu de la nature de la bentonite qui est employée.

Selon un mode de réalisation préféré de l'invention, la viscosité apparente de la boue obtenue par l'adjonction de bentonite et de chaux conformément à ce qui a été dit précédemment a une valeur comprise entre environ 40 et 80 secondes au cône MARSH.

Selon un premier mode de substitution du procédé selon l'invention, on déplace la boue bentonitique par le coulis, le mortier ou le béton.

En opérant aussi la substitution de la boue bentonitique, conformément au procédé selon l'invention par un coulis bentonite-ciment dont la densité est sensiblement la même que celle de la boue, on remarque qu'il se produit un front se séparation beaucoup plus net entre la boue bentonitique et le coulis. De plus, lorsque des poches de boue bentonitique se forment à l'intérieur du coulis, ces dernières sont beaucoup plus faciles à faire disparaître en procédant par exemple à une agitation ou à un brassage, soit par des moyens mécaniques soit par une injection d'air comprimé, soit encore en mettant les produits en circulation à l'aide d'une pompe.

Selon un second mode de substitution du procédé selon l'invention, on transforme in situ la nature de la boue bentonitique en lui injectant une composition surdosée en ciment ou en vidant sur elle du ciment en poudre, chacune de ces opérations étant bien entendu suivie d'un malaxage ou d'un brassage.

Il est également intéressant de remarquer que lorsque l'on utilise la boue enrichie en chaux, conformément à l'invention, le sable qui inévitablement se mélange à la boue lors de l'excavation a beaucoup moins tendance à sédimenter ce qui lui permet de rester d'une manière beaucoup plus stable en suspension dans le coulis. On évite ainsi des dépôts importants de sable au fond de la tranchée ce qui dans certains cas constituerait un inconvénient grave.

Dans un autre mode de mise en œuvre, on peut utiliser le procédé selon l'invention pour substituer du béton à la boue bentonitique pour la réalisation d'un élément de paroi en béton armé de grande profondeur et de largeur relativement limitée. Dans ce cas, la boue bentonitique ne se mélange pas au béton et la substitution se fait en utilisant la différence de densité importante entre la boue et le béton.

Après avoir procédé à l'excavation et à la mise en place des panneaux ou des armatures à l'aide d'une boue bentonitique présentant les mêmes caractéristiques que la boue qui a été décrite ci-dessus, l'on injecte le béton à la partie inférieure de l'excavation ce qui permet de repousser progressivement vers le haut la boue bentonitique qui est alors évacuée.

Il est intéressant de remarquer que la boue bentonitique utilisée conformément à l'invention présente en ce qui concerne le maintien des terrains des qualités qui sont sensiblement les mêmes que la boue bentonitique non enrichie en chaux.

On sait en effet que l'un des avantages des excavations faites sous boue bentonitique réside dans la constitution d'une croûte ou gâteau riche en bentonite qui se crée sur les parois de l'excavation en évitant que l'eau contenue dans la boue ne détériore les parois du terrain. L'introduction de la chaux dans la boue bentonitique, conformément à l'invention, modifie peu l'étanchéité de la croûte bentonitique formée par la boue sur la paroi.

Le procédé selon l'invention présente l'avantage d'être d'une mise en œuvre simple et économique. La boue selon l'invention contient moins de bentonite qu'une boue conventionnelle et est d'un prix de revient moins élevé.

La boue selon l'invention présente une rigidité relativement élevée qui évite la ségrégation des particules du terrain environnant et elle ne risque pas d'acquérir une rigidité excessive par apport de chaux provenant des terrains environnants qui peuvent être crayeux par exemple.

La présente invention a également pour objet la boue bentonitique utilisable pour mettre en œuvre le procédé ci-dessus décrit, qui est caractérisée par le fait qu'elle a été portée au maximum de sa rigidité ou un peu au-delà par adjonction d'une quantité convenable de chaux.

Dans le but de mieux faire comprendre l'invention, on va en décrire maintenant à titre d'illustration et sans aucun caractère limitatif quelques modes de réalisation pris comme exemples.

Exemple 1

On désire réaliser une tranchée dont la profondeur peut être par exemple de 4 ou 5 mètres et qui s'étend sur une longueur de plusieurs centaines de mètres. Cette tranchée est destinée à recevoir soit des canalisations d'évacuation des eaux usées ou autres fluides soit encore des éléments en béton armé destinés à créer une paroi de soutènement.

L'excavation de la tranchée s'effectue à l'aide d'engins conventionnels en opérant sous une boue bentonitique ayant la composition suivante:
– bentonite 35 kilos au m³
– chaux vive (CaO) 2 kilos au m³ soit 6 pour cent en poids par rapport à la bentonite.

La viscosité de la boue au cône MARSH est de 45 secondes.

La proportion en chaux vive a été déterminée de manière à se situer au maximum de viscosité au cône MARSH obtenue par adjonction de quantités de chaux croissantes. C'est ainsi que pour les teneurs en chaux croissantes suivantes (par rapport à la bentonite) on a déterminé les viscosités apparentes suivantes au cône MARSH pour une teneur constante de 35 kilos de bentonite au m³.

– 3% de CaO/bentonite
donnent 38 secondes au cône MARSH

– 4% de CaO/bentonite
donnent 44 secondes au cône MARSH

– 5% de CaO/bentonite
donnent 50 secondes au cône MARSH

– 6% de CaO/bentonite
donnent 46 secondes au cône MARSH

– 7% de CaO/bentonite
donnent 34 secondes au cône MARSH Dans le cas présent on a choisi la proportion de 6% qui correspond à une viscosité apparente de 45 secondes, qui est légèrement au-delà du maximum qui est de 50 secondes.

Le produit de substitution est constitué par un coulis bentonitique contenant 150 kilos de ciment au m³.

La densité du coulis est environ 1,1. Celle de la boue est d'environ 1,05 à 1,1 selon la quantité de sable provenant de l'excavation qui a pollué la boue.

Pour la mise en œuvre du procédé, il est généralement plus intéressant de procéder à la fabrication d'un coulis neuf et d'extraire la boue pour la réutiliser éventuellement ailleurs, cependant il est clair que sans s'écarter de l'esprit de l'invention, on peut apporter à la boue prélevée dans la tranchée les adjuvants nécessaires pour lui donner la composition souhaitée pour le coulis.

Pour mettre en œuvre l'invention l'on injecte le coulis au fond de la tranchée à une distance suffisante pour que ce dernier ne vienne pas au contact de l'engin d'excavation ni des éléments qui sont en cours d'immersion dans la boue à l'intérieur de la tranchée. L'injection de coulis peut par exemple s'effectuer à 50 mètres du point d'excavation de la tranchée.

Exemple 2

On réalise selon l'invention un pieu de section circulaire, ou une barrette de section rectangulaire dont la profondeur peut atteindre plusieurs dizaines de mètres et dont la section peut avoir une surface comprise entre 0,2 et 7 m². Ce pieu ou cette barrette qui est constitué par une cage d'armatures enrobée dans un béton est destiné à transmettre les efforts de l'ouvrage à fonder jusqu'au substratum résultant.

On réalise à l'aide d'engins conventionnels (par exemple tarière ou benne sur Kelly) une excavation de forme correspondante sous une boue bentonitique ayant la même composition que dans l'exemple 1.

On place ensuite la cage d'armatures puis on introduit le béton à l'aide d'une canalisation jusqu'au fond de l'excavation.

Le béton utilisé a la composition suivante pour 1 m³:

| | |
|---|---|
| Ciment | 400 kg |
| Sable 0–5 m | 600 litres |
| Gravillon 5–25 mm | 600 litres |
| Eau | 200 litres |
| Plastifiant et retardateur | |

Au fur et à mesure de l'introduction du béton dans l'excavation, il refoule la boue, enrobe les armatures et finit par remplir complètement l'excavation.

Au contact du béton, la boue bentonitique selon l'invention se fluidifie et se trouve ainsi facilement chassée par le béton. Au contraire, une boue bentonitique selon l'état de la technique se transformerait en un gel difficile à déplacer qui peut provoquer des défauts importants du pieu ou de la barrette en raison des poches de boue qui se forment à l'intérieur du béton ou contre la paroi de l'excavation.

Exemple 3

On perfore une tranchée sous boue bentonitique selon l'invention comme indiqué à l'exemple 1.

Au cours de l'excavation la boue bentonitique se charge en sable et acquiert de ce fait une densité d'environ 1,2 de sorte que l'on peut difficilement lui substituer un coulis de densité plus faible.

On procède alors selon l'invention de la façon suivante:

On prépare un coulis bentonité-ciment contenant 300 kg de ciment par m³.

Sur chaque tronçon de 5 m de la tranchée, qui présente un volume de 20 m³, on introduit 10 m³ de coulis bentonite-ciment dosé à 300 kg de ciment par m³.

On procède ensuite à une agitation mécanique, par air comprimé ou par un autre moyen, pour assurer l'homogénéisation du coulis.

On obtient ainsi, un coulis bentonite-ciment résultant du mélange intime de 10 m³ de coulis bentonite-ciment dosé à 300 kg de ciment, avec 10 m³ de boue bentonitique selon l'invention, mélange dont la teneur en ciment est de 150 kg par m³ comme on souhaite l'obtenir.

Cette mise en œuvre est rendue possible grâce à la boue bentonitique selon l'invention.

Exemple 4

On réalise selon l'invention une paroi d'étanchéité, de 15 mètres de profondeur et de 0,5 mètre d'épaisseur.

On réalise par une technique conventionnelle l'excavation correspondante sur une longueur de 3 mètres, sous boue bentonitique conforme à l'invention; par exemple suivant la composition de l'exemple 1. Cette boue occupe un volume d'environ 45 m³.

On désire obtenir un coulis bentonite-ciment durci contenant 100 kg de ciment par m³.

On introduit dans la tranchée pleine de boue 4,5 tonnes de ciment en poudre, tandis qu'on extrait environ 1,7 m³ de boue ce qui correspond au volume du ciment introduit.

On procède ensuite à une agitation mécanique, par exemple par air comprimé, éventuellement assistée par pompage et recyclage provoquant un mouvement de convection dans la tranchée, jusqu'à obtenir une homogénéisation satisfaisante du coulis ce qui s'obtient facilement grâce à l'invention.

Il est bien entendu que les modes de mise en œuvre du procédé qui ont été décrits ci-dessus ne présentent aucun caractère limitatif et qu'ils pourront recevoir toutes modifications désirables sans sortir pour cela du cadre de l'invention.

En particulier, il est clair que l'invention n'est pas limitée aux tranchées de grande longueur ou de grande profondeur et que le procédé selon l'invention peut être en particulier utilisé pour la réalisation de puits par exemple.

**Revendications**

1. Procédé pour substituer un coulis à base de bentonite et de ciment, un lait de ciment, un mortier ou un béton à une boue bentonitique contenue dans une cavité creusée dans le sol, caractérisé par le fait que l'on utilise en vue de sa substitution une boue bentonitique contenant une quantité de chaux qui correspond sensiblement à, ou qui dépasse légèrement la quantité de chaux qui confère à la boue bentonitique sa rigidité maximale.

2. Procédé selon la revendication 1, caractérisé par le fait que la boue bentonitique comprend moins de 10% de chaux (CaO) exprimé en poids de chaux vive par rapport au poids de bentonite.

3. Procédé selon l'une quelconque des revendications précédentes, caractérisé par le fait que la boue bentonitique a une viscosité au cône MARSH comprise entre environ 40 et 80 secondes.

4. Procédé selon l'une quelconque des revendications précédentes, caractérisé par le fait que la substitution s'effectue en déplaçant la boue par introduction de coulis, de mortier ou de béton.

5. Procédé selon l'une quelconque des revendications 1 à 3, caractérisé par le fait que l'on ajoute à la boue une composition surdosée en ciment ou du ciment en poudre.

6. Procédé selon l'une quelconque des revendications précédentes, caractérisé par le fait que pour faciliter la résorption des poches de boue dans le coulis, le mortier ou le béton, on procède à une agitation par des moyens mécaniques à l'aide d'air comprimé, ou en provoquant une circulation des produits.

7. Boue bentonitique pour la mise en œuvre du procédé selon l'une quelconque des revendications précédentes, caractérisée par le fait que la boue bentonitique est enrichie en chaux de manière à ce qu'elle se situe au voisinage du maximum de sa rigidité ou légèrement au-delà.

**Claims**

1. Method of substituting a slurry based on bentonite and cement, a cement grout, a mortar or a concrete for a bentonitic sludge contained in a cavity excavated in the ground, characterised in that with a view to its substitution there is used a bentonitic sludge containing a quantity of lime which corresponds substantially to or which slightly exceeds the quantity of lime which imparts to the bentonite sludge its maximum rigidity.

2. Method according to claim 1, characterised in that the bentonitic sludge comprises less than 10% of lime (CaO) expressed by weight of quicklime relatively to the weight of bentonite.

3. Method according to any one of the preceding claims characterised in that the bentonitic sludge has a MARSH cone viscosity of between 40 and 80 seconds approximately.

4. Method according to any one of the preceding claims, characterised in that when the substitution is made the sludge is displaced by introduction of slurry, mortar or concrete.

5. Method according to any one of claims 1 to 3, characterised in that an overdosed composition of cement or cement in powder form is added to the sludge.

6. Method according to any one of the preceding claims, characterised in that to facilitate the resorption of pockets of sludge in the slurry, mortar or concrete, agitation is carried out by mechanical means with the aid of compressed air, or by bringing about circulation of the products.

7. Bentonitic sludge for carrying out the method according to any one of the preceding claims, characterised in that the bentonitic sludge is enriched with lime in such a manner that the said sludge is in the vicinity of, or slightly beyond, its rigidity maximum.

**Patentansprüche**

1. Verfahren zum Austauschen von Bentonitschlamm in einem Hohlraum durch Zementschlamm, Mörtel oder Beton, dadurch gekennzeichnet, dass zum Austauschen ein Bentonitschlamm verwendet wird, welcher eine Menge an Kalk enthält, die im wesentlichen der Kalkmenge entspricht oder die Kalkmenge etwas übersteigt, welche dem Bentonitschlamm seine maximale Festigkeit verleiht.

2. Verfahren nach Anspruch 1, dadurch gekennzeichnet, dass der Bentonitschlamm wenigstens 10% Kalk (CaO) enthält, ausgedrückt in Gewicht an Ätzkalk zum Gewicht an Bentonit.

3. Verfahren nach irgendeinem der vorangehenden Ansprüche, dadurch gekennzeichnet, dass der Bentonitschlamm eine mit dem MARSH-Kegel gemessene Viskosität zwischen etwa 40 und 80 sec. hat.

4. Verfahren nach irgendeinem der vorangehenden Ansprüche, dadurch gekennzeichnet, dass das Austauschen in der Weise vor sich geht, dass der Schlamm durch Einführen von Zementmilch, Mörtel oder Beton verdrängt wird.

5. Verfahren nach irgendeinem der vorangehenden Ansprüche, dadurch gekennzeichnet, dass dem Schlamm eine an Zement oder Zementpulver überdosierte Mischung zugesetzt wird.

6. Verfahren nach irgendeinem der vorangehenden Ansprüche, dadurch gekennzeichnet, dass zur Erleichterung der Resorption der Schlammtaschen in der Zementmilch, im Mörtel oder im Beton durch mechanische Mittel mit Hilfe von Pressluft die Masse gerührt wird oder eine Zirkulation der Produkte hervorgerufen wird.

7. Bentonitschlamm zur Durchführung des Verfahrens nach irgendeinem der vorangehenden Ansprüche, dadurch gekennzeichnet, dass der Bentonitschlamm derart mit Kalk angereichert ist, dass seine Festigkeit nahe dem Maximalwert oder etwas darüber liegt.